# EUROPÄISCHE PATENTSCHRIFT

(11) **EP 1 049 887 B1**
(45) Veröffentlichungstag und Bekanntmachung des Hinweises auf die Patenterteilung: **12.05.2004**
(21) Anmeldenummer: 99903687.4
(22) Anmeldetag: 28.01.1999
(51) Int. Cl.: F16D 65/16

(54) **BETÄTIGUNGSKOLBEN FÜR EINE HYDRAULISCH UND MECHANISCH BETÄTIGBARE TEILBELAG-SCHEIBENBREMSE**
ACTUATING PISTON FOR A HYDRAULICALLY AND MECHANICALLY ACTUATED DISK BRAKE WITH PARTIAL BRAKE LINING
PISTON D'ACTIONNEMENT POUR FREIN A DISQUE A GARNITURE PARTIELLE A COMMANDE HYDRAULIQUE ET MECANIQUE

(30) Priorität: 28.01.1998 DE 29801364 U
(43) Veröffentlichungstag der Anmeldung: 08.11.2000
(73) Patentinhaber: LUCAS INDUSTRIES PUBLIC LIMITED COMPANY, Solihull B90 4LA (GB)
(72) Erfinder: VARZESCU, Viktor, D-56077 Koblenz (DE); ZIMMERMANN, Roman, D-56566 Neuwied (DE); WAGNER, Lothar, D-56414 Steinefrenz (DE); LAUX, Volker, D-56321 Rhens (DE)
(74) Vertreter: Beyer, Andreas, Dr.
(86) Internationale Anmeldenummer: PCT/EP1999/000548
(87) Internationale Veröffentlichungsnummer: WO 1999/039113

(56) Entgegenhaltungen:
- EP-A- 0 062 567
- WO-A-97/18403
- DE-A- 2 739 003
- DE-A- 19 534 220
- US-A- 4 595 085
- US-A- 5 172 792
- PATENT ABSTRACTS OF JAPAN vol. 009, no. 209 (M-407), 27. August 1985 & JP 60 069334 A (AKEBONO BRAKE), 20. April 1985

## Beschreibung

Die Erfindung betrifft einen Betätigungskolben für eine hydraulisch und mechanisch betätigbare Teilbelag-Scheibenbremse gemäß dem Oberbegriff des Anspruchs 1. Scheibenbremsen dieser Art werden für eine Betriebsbremsung üblicherweise hydraulisch betätigt, beispielsweise durch einen Tritt auf das Bremspedal einer Fahrzeugbremsanlage, sie können jedoch auch als Feststellbremse (sog. Handbremse) dienen und hierzu mechanisch betätigt werden, z.B. durch einen Handbremshebel oder ein separates Feststellbremspedal. Bei Scheibenbremsen der genannten Art läßt sich demnach der oft auch als Bremskolben bezeichnete Betätigungskolben einerseits mittels Hydraulikdruck und andererseits durch eine rein mechanische Einrichtung gegen den bzw. die Bremsbeläge pressen, um die für eine Bremsung bzw. ein Feststellen erforderliche Zuspannkraft zu erzielen.

Die EP 0 403 635 B1 beschreibt eine solche Scheibenbremse, bei der während einer Nutzung als Feststellbremse die Zuspannkraft über einen dem Ausgleich von Bremsbelagverschleiß dienenden Nachstellmechanismus auf den Betätigungskolben übertragen wird. Kritisch hinsichtlich der Belastung ist dabei eine Konuskupplung, die von einem konischen Flansch eines Strebenteiles des Nachstellmechanismus und einer am Betätigungskolben ausgebildeten, komplementären Konusfläche gebildet wird. Neben der axialen Weiterleitung der Zuspannkraft von dem Nachstellmechanismus auf den Betätigungskolben soll die Konuskupplung auch ein Verdrehen der beiden genannten Teile relativ zueinander verhindern. Lediglich bei einem Ausgleich von Belagverschleiß durch den Nachstellmechanismus soll ein leichtes Verdrehen der Kupplungsflächen gegeneinander möglich sein.

Der Erfindung liegt die Aufgabe zugrunde, einen zum Einsatz in einer Bremse der genannten Art geeigneten Betätigungskolben bereitzustellen, der leichter als herkömmlich verwendete Betätigungskolben ist. Insbesondere soll der bereitzustellende Betätigungskolben bei geringerem Gewicht hohe Axialkräfte übertragen, eine geringe radiale Aufweitung aufweisen und einer Reibverschleißbeanspruchung der kraftübertragenden Konusfläche standhalten können.

Ausgehend von dem Betätigungskolben einer Teilbelag-Scheibenbremse wie sie aus der EP 0 403 635 B1 bekannt ist, ist diese Aufgabe erfindungsgemäß dadurch gelöst, daß der die axialkraftübertragende Konusfläche umfassende Teil des Betätigungskolbens aus Stahl und der mit der Zylinderbohrung der Scheibenbremse zusammenwirkende Teil des Betätigungskolbens aus Leichtmetall oder aus Kunststoff besteht, und daß die genannten Teile des Betätigungskolbens als einstückiges Verbundbauteil ausgeführt sind. Die erfindungsgemäße Materialpaarung Stahl/Leichtmetall bzw. Stahl/Kunststoff ermöglicht es im Verein mit der Ausführung des Betätigungskolbens als einstückiges Verbundbauteil, die hohen Axialkräfte in der Größenordnung von zwei Tonnen trotz des signifikant verringerten Betätigungskolbengewichts einwandfrei zu übertragen. Die Ausbildung der axialkraftübertragenden Konusfläche aus Stahl widersteht darüber hinaus einer Reibverschleißbeanspruchung sehr gut.

Bei einer bevorzugten Ausführungsform eines erfindungsgemäßen Betätigungskolbens ist dieser hohl und das die axialkraftübertragende Konusfläche umfassende Stahlbauteil ist als in dem Kunststoff- oder Leichtmetallteil aufgenommener, hohlzylindrischer Einsatz ausgebildet. Dies sichert bei äußerst gewichtssparender Konstruktion eine gute Weiterleitung der Axialkräfte durch den Betätigungskolben.

Wenn der erfindungsgemäße Betätigungskolben hohl ist, weist er häufig einen ersten Abschnitt mit kleinerem Innendurchmesser und einen zweiten Abschnitt mit größerem Innendurchmesser auf. Das die axialkraftübertragende Konusfläche aufweisende Stahlbauteil erstreckt sich dann entlang zumindest annähernd der gesamten Länge des zweiten Abschnitts, d.h. entlang des Abschnitts mit dem größeren Innendurchmesser. Auf diese Weise wird erreicht, daß der beim Bremsen durch den Hydraulikdruck am stärksten belastete Teil des Kolbenmantels, der zudem eine geringere Wanddicke als der restliche Teil des Kolbenmantels besitzt, durch das Stahlbauteil wirksam verstärkt wird. Einer radialen Aufweitung des Kolbenmantels in dem genannten Bereich, die zu einem Klemmen des Betätigungskolbens in dem Zylinder führen kann, oder gar einem Aufreißen des Kolbenmantels ist damit entgegengewirkt. Vorzugsweise ist das Stahlbauteil rohrförmig und ist durch ein Blechumformverfahren, wie beispielsweise durch Tiefziehen oder Drücken, hergestellt. Mit Drücken ist hier gemeint, daß das rohrförmige Stahlbauteil einem Rollvorgang auf einem Gegenkörper unterzogen wird.

Gemäß einer weitergebildeten Ausführungsform eines hohlzylindrischen und vorzugsweise rohrförmigen Stahlbauteils, das sich längs des Abschnitts mit größerem Innendurchmesser des Betätigungskolbens erstreckt, weist dieses Stahlbauteil an seinem dem ersten Abschnitt des Betätigungskolbens zugewandten Ende einen radial gerichteten Ringflansch auf, der vorzugsweise radial nach innen ragt. Ein solcher radialer Ringflansch versteift den Bereich des Stahlbauteiles, in dem die axialkraftübertragende Konusfläche angeordnet ist.

Bei bevorzugten Ausführungsformen des erfindungsgemäßen Betätigungskolbens erstreckt sich das Stahlbauteil nicht nur längs des zweiten Abschnitts des Betätigungskolbens, der den größeren Innendurchmesser aufweist, sondern erstreckt sich auch in den ersten Abschnitt des Betätigungskolbens mit dem geringeren Innendurchmesser hinein. Ist beispielsweise das Stahlbauteil mit einem radial nach innen ragenden Ringflansch versehen, der den Bereich des Stahlbauteils zusätzlich versteift, in dem die axialkraftübertragende Konusfläche angeordnet ist, dann setzt sich das Stahlbauteil vorzugsweise von diesem radialen Ringflansch aus axial in den ersten Abschnitt mit geringerem Innendurchmesser des Betätigungskolbens fort. Besonders bevorzugt ist dabei der Übergangsbereich zwischen dem radialen Ringflansch und der Fortsetzung des Stahlbauteiles in den ersten Abschnitt des Betätigungskolbens hinein abgerundet ausgebildet, um das beschädigungsfreie Einführen empfindlicher Bauteile wie beispielsweise einer Dichtung zu erleichtern. Das Stahlbauteil kann sich in den ersten Abschnitt des Betätigungskolbens lediglich hinein erstrecken, es kann sich jedoch auch über die gesamte Länge des ersten Abschnitts des Betätigungskolbens erstrecken.

Gemäß einer noch weitergebildeten Ausführungsform des erfindungsgemäßen Betätigungskolbens ist das die axialkraftübertragende Konusfläche umfassende Stahlbauteil als in dem Kunststoff- oder Leichtmetallteil aufgenommener, im wesentlichen topfförmiger Einsatz ausgestaltet, der einen Teil der Stirnfläche des Betätigungskolbens bildet, die einer Bremsscheibe zugewandt ist. Bei gegenüber der vorgenannten Ausführungsform geringfügig erhöhtem Gesamtgewicht hat die zuletzt genannte Ausführungsform den Vorteil, daß auch bei einer hydraulischen Betätigung nahezu alle axialen Zuspannkräfte über den topfförmigen Einsatz auf den Bremsbelag übertragen werden, woraus sich eine Entlastung des mechanisch weniger stabilen Kunststoff- oder Leichtmetallteils des erfindungsgemäßen Betätigungskolbens ergibt.

Vorzugsweise ist das die axialkraftübertragende Konusfläche aufweisende Stahlbauteil eines erfindungsgemäßen Betätigungskolbens dann, wenn das mit der Zylinderbohrung der Scheibenbremse zusammenwirkende Bauteil des Betätigungskolbens aus Leichtmetall besteht, in das Leichtmetall eingegossen oder von dem Leichtmetall umspritzt. Besteht das mit der Zylinderbohrung der Scheibenbremse zusammenwirkende Bauteil des Betätigungskolbens aus Kunststoff, so ist das Stahlbauteil bevorzugt vom Kunststoff umspritzt oder ebenfalls in den Kunststoff eingegossen. Das Umspritzen oder Eingießen des Stahlbauteiles in das Kunststoff- oder Leichtmetallbauteil führt zu einer äußerst innigen und damit stabilen Verbindung der beiden genannten Bauteile des erfindungsgemäßen Betätigungskolbens.

Je nachdem, welches Kunststoffmaterial für das Kunststoffbauteil verwendet wird, kann es erforderlich sein, das Kunststoffbauteil zu tempern, um die erforderliche Festigkeit zu erzielen. Da viele Kunststoffmaterialien während eines Temperungsprozesses schrumpfen, so daß das Kunststoffbauteil seine Maße ändert, kann es vorteilhaft sein, das Kunststoffbauteil separat herzustellen, zu tempern und erst dann mit dem Stahlbauteil zu verbinden. In einem solchen Fall wird das Kunststoffbauteil vorzugsweise durch Verkleben oder Verpressen mit dem Stahlbauteil zu einem einstückigen Verbundbauteil verbunden.

Unabhängig davon, ob das Kunststoffbauteil aus einem Material besteht, welches einem Temperungsprozess unterzogen werden muß und im Zuge dessen möglicherweise schrumpft, hat das Einkleben des Stahlbauteiles in das Kunststoff- oder Leichtmetallbauteil den Vorteil, daß die Klebstoffschicht Ausdehnungsunterschiede, die zwischen dem Stahlbauteil und dem Kunststoff- oder Leichtmetallbauteil bestehen können, ausgleichen kann. Als weiterer Vorteil kann beim Einkleben des vorzugsweise rohrförmigen Stahlbauteiles in das vorgefertigte Kunststoff- oder Leichtmetallbauteil die Mittelachse des Stahlbauteiles auf einfache Weise in Übereinstimmung mit der Mittelachse des Kunststoff- oder Leichtmetallbauteiles gebracht werden, denn die Klebstoffschicht kann dazu benutzt werden, die Fertigungstoleranzen zwischen dem Stahlbauteil und dem Kunststoff- oder Leichtmetallbauteil auszugleichen.

Der Klebstoff kann vollflächig auf das Stahlbauteil und/oder das Kunststoff- oder Leichtmetallbauteil aufgetragen werden, er kann jedoch auch in Gestalt eines Epoxydharzringes bereitgestellt werden, der zwischen das Stahlbauteil und das Kunststoff- oder Leichtmetallbauteil eingelegt wird. Bei einer anschließenden Erwärmung der beiden Bauteile auf etwa 150°C schmilzt das Epoxydharz und verklebt das Kunststoff- oder Leichtmetallbauteil hydraulisch dicht mit dem Stahlbauteil.

Darüber hinaus kann dann, wenn das Stahlbauteil in das Kunststoff- oder Leichtmetallbauteil eingeklebt werden soll, das Stahlbauteil zusammen mit der in ihm angeordneten Nachstellmechanik der Bremse als Baueinheit vormontiert werden. Diese Baueinheit aus Nachstellmechanik und Stahlbauteil wird dann in das Kunststoff- oder Leichtmetallbauteil eingeklebt. Die beim Einklebevorgang auftretende Temperatur ist so niedrig, daß Dichtungen der Nachstellmechanik nicht beschädigt werden.

Der hier verwendete Begriff "Verbundbauteil" umfaßt auch solche Ausführungsformen eines erfindungsgemäßen Betätigungskolbens, bei denen zwischen dem Kunststoff- oder Leichtmetallbauteil und dem Stahlbauteil minimale Spalte bestehen. Damit trotz solcher Spalte eine hydraulisch dichte Verbindung zwischen dem Kunststoff- oder Leichtmetallbauteil und dem Stahlbauteil erzielt wird, können Dichtungen zwischen diesen beiden Bauteilen vorgesehen sein, beispielsweise O-Ringdichtungen. Solche Ausführungsformen des erfindungsgemäßen Betätigungskolbens gestatten es ebenfalls, zunächst das Stahlbauteil zusammen mit der Nachstellmechanik der Bremse als Baueinheit vorzumontieren und erst dann diese Baueinheit mit dem Kunststoff- oder Leichtmetallbauteil zu verbinden.

Um die Stabilität der Verbindung des Stahlbauteiles mit dem Kunststoff- oder Leichtmetallbauteil noch weiter zu erhöhen, ist gemäß einer abgewandelten Ausführungsform des erfindungsgemäßen Betätigungskolbens das Stahlbauteil auf einer Außenumfangsfläche mit Vorsprüngen versehen, die einen Formschluß zwischen dem Stahlbauteil und dem Kunststoff- oder Leichtmetallbauteil herstellen. Diese Vorsprünge können beispielsweise als umlaufende Axialverzahnung ausgebildet sein. Andere Arten von Vorsprüngen sind jedoch ebenfalls geeignet, z.B. eine Kreuzrändelung der Außenumfangsfläche des Stahlbauteiles.

Bei bevorzugten Ausgestaltungen des erfindungsgemäßen Betätigungskolbens weist das Stahlbauteil auf einer der axialkraftübertragenden Konusfläche axial gegenüberliegenden Seite zumindest eine großzügig bemessene, radiale Ringfläche auf. Die bei der Übertragung einer hohen Axialkraft am Übergang zwischen dem Stahlteil und dem Kunststoff- oder Leichtmetallteil entstehende Materialbeanspruchung (insbesondere Materialpressung) des Leichtmetall- oder Kunststoffteils wird auf diese Weise deutlich herabgesetzt.

Neben dem erfindungsgemäßen Betätigungskolben betrifft die vorliegende Erfindung auch eine mit einem solchen Betätigungskolben ausgestattete Teilbelag-Scheibenbremse für Kraftfahrzeuge, deren Gewicht aufgrund der Verwendung des erfindungsgemäßen Betätigungskolbens verringert ist.

Zwei bevorzugte Ausführungsbeispiele eines erfindungsgemäßen Betätigungskolbens werden im folgenden anhand der beigefügten Figuren näher erläutert. Es zeigt:
- Fig. 1: ein erstes Ausführungsbeispiel eines erfindungsgemäßen Betätigungskolbens im Längsschnitt,
- Fig. 2: ein abgewandeltes, zweites Ausführungsbeispiel eines erfindungsgemäßen Betätigungskolbens ebenfalls im Längsschnitt,
- Fig. 3: ein drittes Ausführungsbeispiel eines erfindungsgemäßen Betätigungskolbens im Längsschnitt,
- Fig. 4: ein gegenüber Fig. 3 etwas abgewandeltes Ausführungsbeispiel eines erfindungsgemäßen Betätigungskolbens ebenfalls im Längsschnitt,
- Fig. 5: ein gegenüber den Figuren 3 und 4 nochmals abgewandeltes Ausführungsbeispiel eines erfindungsgemäßen Betätigungskolbens, und
- Fig. 6: den in Fig. 5 dargestellten Betätigungskolben zusammen mit wesentlichen Teilen einer Nachstellmechanik einer Scheibenbremse.

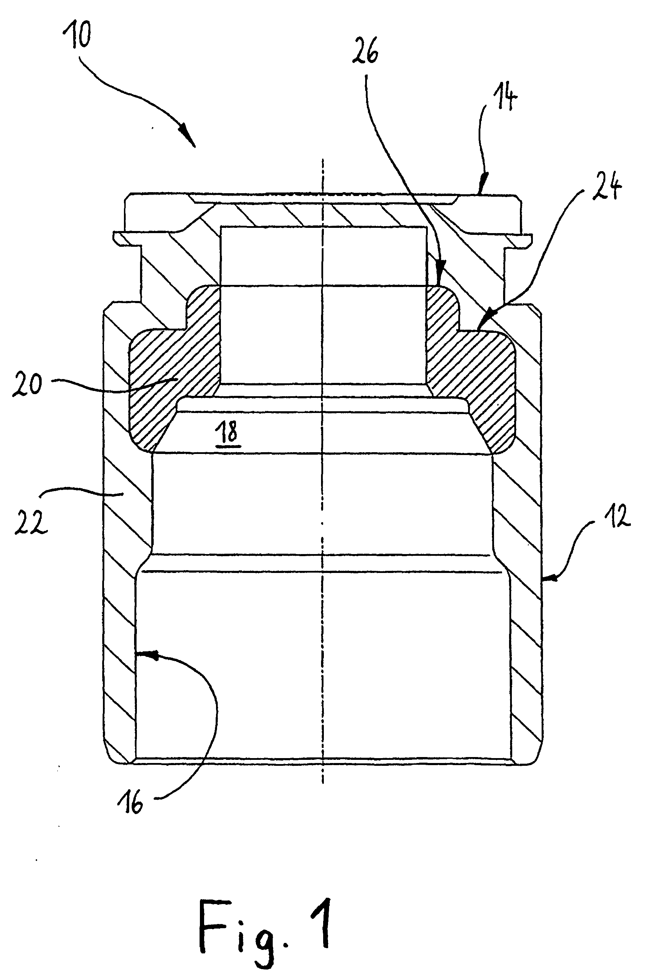

Ein in Fig. 1 dargestellter Betätigungskolben 10 einer weiter nicht dargestellten Teilbelag-Scheibenbremse für Kraftfahrzeuge hat eine Mantelfläche 12, mit der der Betätigungskolben 10 in einer Zylinderbohrung der Scheibenbremse abdichtend und axial gleitend geführt ist.

Mit einer Stirnfläche 14 liegt der Betätigungskolben 10 an der Trägerplatte eines Bremsbelags der Scheibenbremse an, um letzteren gegen die Bremsscheibe pressen zu können. Dies kann einerseits durch Hydraulikdruck und andererseits durch ein rein mechanisches Anpressen des Betätigungskolbens 10 geschehen. Üblicherweise wird bei Scheibenbremsen, die sowohl ein hydraulisches als auch ein rein mechanisches Anpressen des Betätigungskolbens 10 erlauben, der Betätigungskolben 10 bei einer normalen Betriebsbremsung hydraulisch und bei einer Verwendung als Feststellbremse rein mechanisch in Richtung auf die Bremsscheibe verschoben bzw. gegen die Trägerplatte des Bremsbelages gepreßt. Die genaue Funktion solcher Scheibenbremsen ist Fachleuten auf diesem Gebiet gut bekannt und wird deshalb hier nicht näher erläutert. Hingewiesen wird auf die EP 0 403 635 B1, in der die Funktion einer Scheibenbremse detailliert beschrieben ist, bei der der Betätigungskolben hydraulisch und rein mechanisch verschoben werden kann.

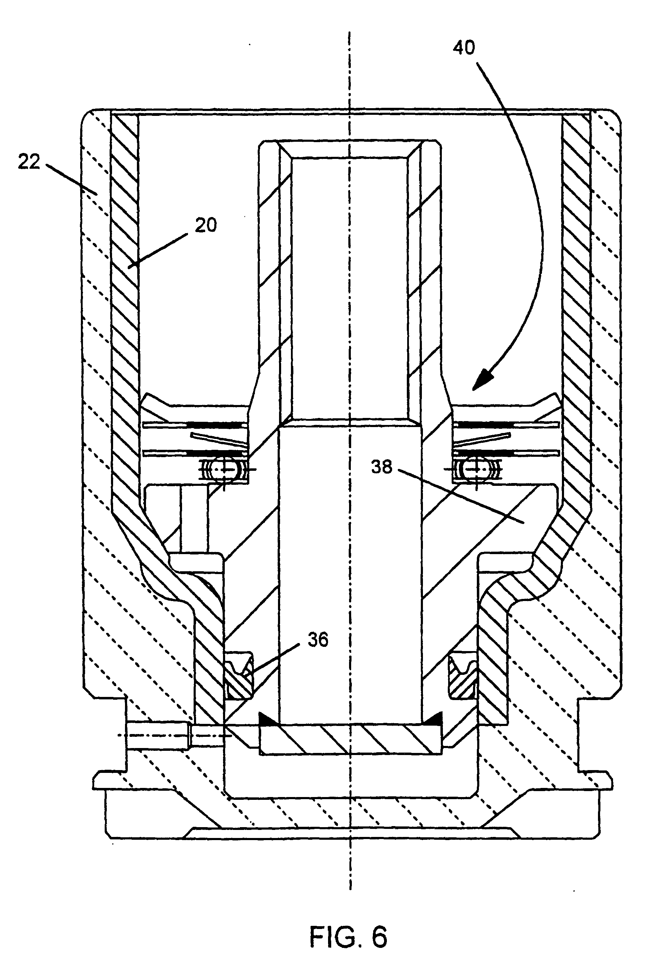

Ein innerer Hohlraum 16 des Betätigungskolbens 10 nimmt zumindest einen Teil eines Nachstellmechanismus (siehe hierzu auch Fig. 6) auf, der dazu dient, eine Abnutzung der Reibbeläge der Scheibenbremse auszugleichen, indem der Betätigungskolben 10 entsprechend dem stattgefundenen Verschleiß der Reibbeläge in Richtung auf die Bremsscheibe nachgestellt wird, so daß bei Verwendung der Scheibenbremse als Feststellbremse der zum Zuspannen notwendige Betätigungsweg trotz mehr und mehr abgenutzter Reibbeläge im wesentlichen gleich bleibt.

Beim mechanischen Zuspannen wird die Axialkraft über eine Konusfläche 18 in den Betätigungskolben 10 eingeleitet. Wie aus Fig. 1 ersichtlich, ist diese axialkraftübertragende Konusfläche 18 an einem hohlzylindrischen Stahlbauteil 20 ausgebildet, das in ein aus Kunststoff- oder Leichtmetall bestehendes Bauteil 22 eingebettet ist, das den übrigen Teil des Betätigungskolbens 10 und insbesondere den mit der Zylinderbohrung der Scheibenbremse zusammenwirkenden Teil des Betätigungskolbens bildet. Das Stahlbauteil 20 ist in das Leichtmetall- oder Kunststoffbauteil 22 eingegossen oder eingeklebt, so daß die beiden Bauteile 20 und 22 ein einstückiges Verbundbauteil bilden. Besteht das Bauteil 22 aus Kunststoff, kann alternativ das Stahlbauteil 20 auch von dem Kunststoffbauteil 22 umspritzt sein.

Zur materialschonenden Übertragung von Axialkräften, die über die Konusfläche 18 in den Betätigungskolben 10 eingeleitet werden, weist das Stahlbauteil 20 auf einer der Konusfläche 18 axial gegenüberliegenden Seite eine großzügig bemessene radiale Ringfläche 24 sowie eine etwas kleiner bemessene radiale Ringfläche 26 auf. Nahezu alle umlaufenden Kanten des Stahlbauteiles 20, die sich im Kunststoff- oder Leichtmetallbauteil 22 befinden, sind stark verrundet ausgeführt, um jegliche Kerbwirkung zu vermeiden.

Wenn das Bauteil 22 aus Leichtmetall besteht, wird als Werkstoff für das Stahlbauteil 20 vorzugsweise ein X12CrNiS 18.8 Stahl (Werkstoffnr. 1.4305) mit einem thermischen Ausdehnungskoeffizienten von 17 bis 18 x 10⁻⁶ m/(m x K) und als Werkstoff für das Leichtmetallbauteil 22 eine AlSi7-Legierung (Werkstoff-nr. 3.2371) bis zu einer AlSil2-Legierung (Werkstoffnr. 3.2581) verwendet, die einen thermischen Ausdehnungskoeffizienten von 24 bzw. 21 x 10⁻⁶ m/(m x K) besitzt. Beim Einsatz der genannten Werkstoffe spielt im interessierenden Temperaturbereich die unterschiedliche thermische Dehnung aufgrund der relativ nahe beieinanderliegenden thermischen Ausdehnungskoeffizienten beider Materialien nur eine untergeordnete Rolle. Wenn das Bauteil 22 aus Kunststoff besteht, können ohne weiteres auch andere Stähle für das Stahlbauteil 20 verwendet werden.

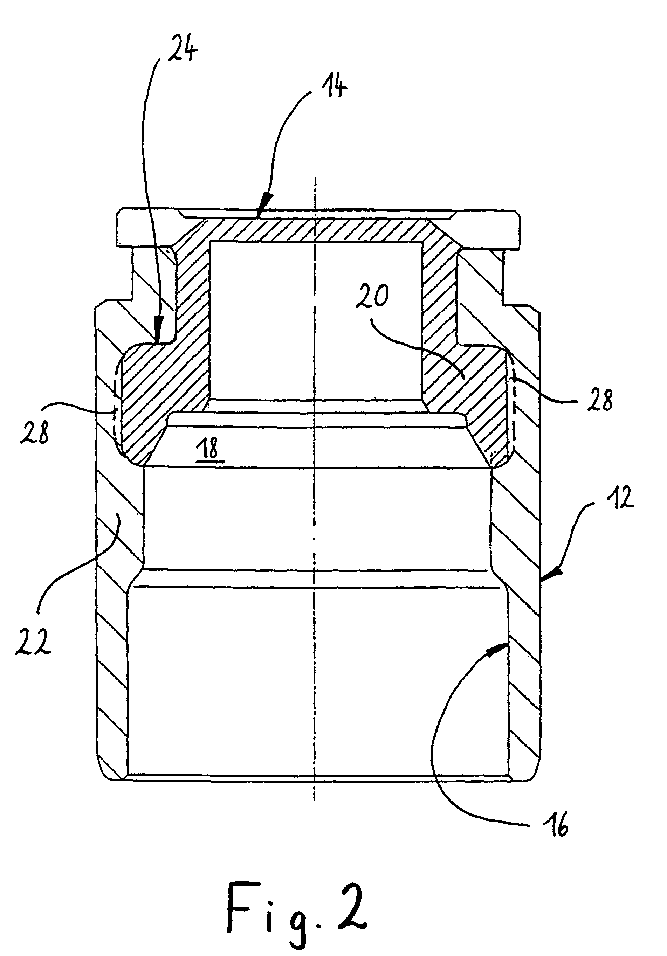

Fig. 2 zeigt ein zweites Ausführungsbeispiel eines Betätigungskolbens 10, welches sich vom ersten Ausführungsbeispiel dadurch unterscheidet, daß das als Einsatz ausgebildete Stahlbauteil 20 nicht hohlzylindrisch, sondern topfförmig ist und bis in die Stirnfläche 14 des Betätigungskolbens 10 reicht. Die Übertragung von Axialkräften durch den Betätigungskolben 10 auf einen hier nicht dargestellten Bremsbelag gestaltet sich beim zweiten Ausführungsbeispiel noch vorteilhafter, da eine über die Konusfläche 18 eingeleitete Axialkraft nahezu ausschließlich direkt durch das Stahlbauteil 20 auf den Bremsbelag übertragen werden kann. Das Leichtmetall- oder Kunststoffbauteil 22 ist dadurch entlastet.

Zur noch stabileren Gestaltung der innigen Verbindung zwischen dem Stahlbauteil 20 und dem Leichtmetall- oder Kunststoffbauteil 22 sind gemäß Fig. 2 auf einer Außenumfangsfläche des Stahlbauteiles 20 mehrere Vorsprünge 28 vorgesehen, die zu einem Formschluß zwischen dem Stahlbauteil 20 und dem Kunststoff- oder Leichtmetallbauteil 22 führen. Die Vorsprünge 28 können beispielsweise in Form einer um die Außenumfangsfläche des Stahlbauteiles 20 umlaufenden Axialverzahnung ausgeführt sein. Ebenso kann eine dem Fachmann geläufige Rändelung, z.B. eine Kreuzrändelung, verwendet werden.

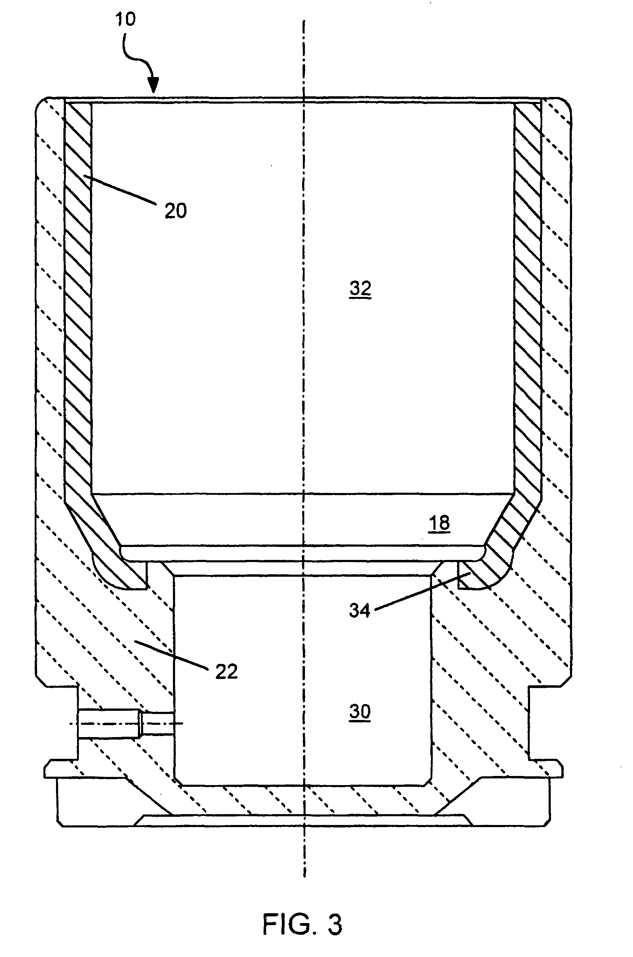

Fig. 3 zeigt ein weiteres Ausführungsbeispiel eines Betätigungskolbens 10, bei dem das Stahlbauteil 20 rohrförmig und mit im wesentlichen gleicher Wanddicke ausgeführt ist. Der hohle Betätigungskolben 10 hat einen ersten Abschnitt 30 und einen zweiten Abschnitt 32, wobei der Innendurchmesser des ersten Abschnitts 30 kleiner als der Innendurchmesser des zweiten Abschnitts 32 ist. Das Stahlbauteil 20, das die axialkraftübertragende Konusfläche 18 trägt, erstreckt sich entlang zumindest annähernd der gesamten Länge des zweiten Abschnitts 32 im Betätigungskolben 10, um letzteren in diesem Bereich, in dem die Wanddicke des Kunststoff- oder Leichtmetallbauteils 22 relativ gering ist, zu verstärken und so einer radialen Aufweitung des Betätigungskolbens 10 entgegenzuwirken. Zur Versteifung desjenigen Abschnitts des Stahlbauteils 20, in dem sich die axialkraftübertragende Konusfläche 18 befindet, ist das Stahlbauteil 20 mit einem radial nach innen ragenden Ringflansch 34 versehen, der sich bei dem in Fig. 3 dargestellten Ausführungsbeispiel an dem dem ersten Abschnitt 30 des Betätigungskolbens 10 zugewandten Ende des Stahlbauteils 20 befindet.

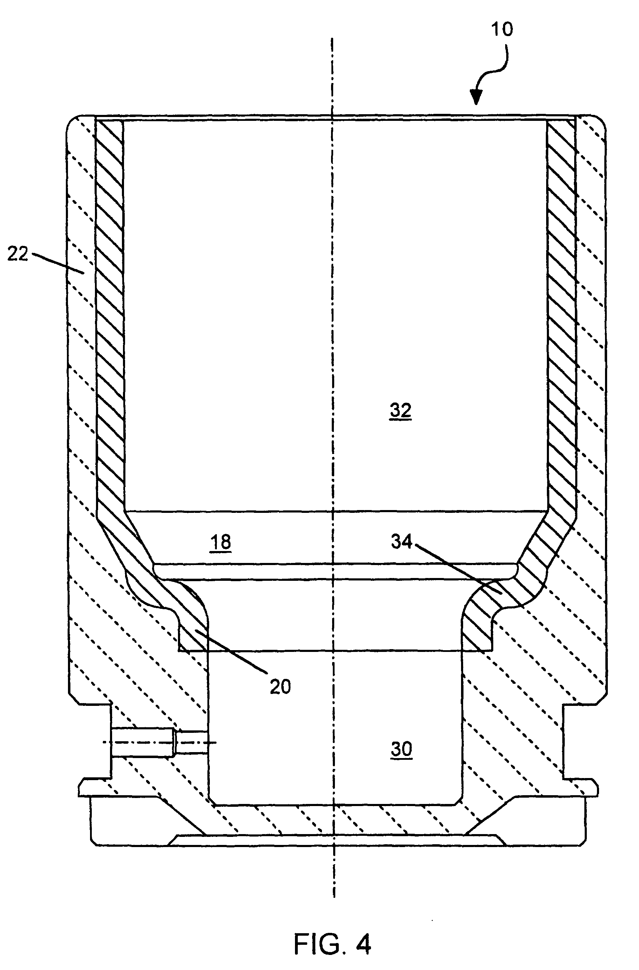

Gemäß Fig. 4, die ein der Fig. 3 ähnliches Ausführungsbeispiel eines Betätigungskolbens 10 zeigt, erstreckt sich das Stahlbauteil 20 nicht nur längs des zweiten Abschnitts 32 des Betätigungskolbens 10, sondern auch in dessen ersten Abschnitt 30 hinein. Der Übergangsbereich zwischen dem Ringflansch 34 und dem durchmesserkleineren Teil des Stahlbauteiles 20 ist dabei abgerundet ausgeführt, um das Einführen einer Dichtung der Nachstellmechanik (siehe hierzu Fig. 6) in den ersten Abschnitt 30 zu erleichtern und die Dichtung nicht zu beschädigen.

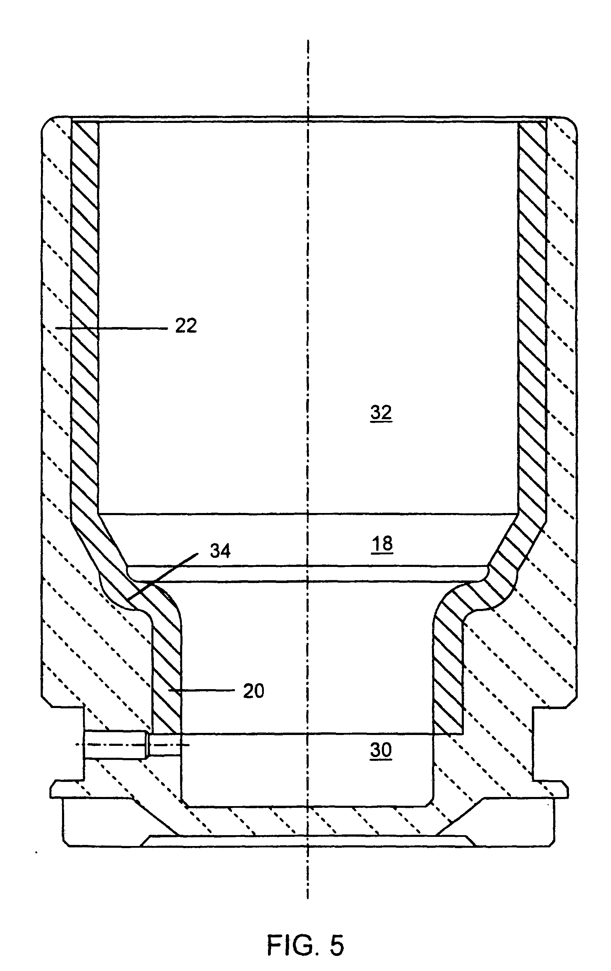

Gemäß Fig. 5, die ein nochmals abgewandeltes Ausführungsbeispiel eines Betätigungskolbens 10 ähnlich den Figuren 3 und 4 darstellt, erstreckt sich das rohrförmige Stahlbauteil 20 noch weiter in den ersten Abschnitt 30 des Betätigungskolbens 10 hinein. Auf diese Weise wird sichergestellt, daß die aus Fig. 6 ersichtliche Dichtung 36 der Nachstellmechanik während ihres gesamten axialen Verschiebeweges immer in Berührung mit der Innenfläche des Stahlbauteils 20 befindet, die hierzu in diesem Bereich, d.h. längs des ersten Abschnitts 30 feinbearbeitet ist.

Fig. 6 zeigt zum besseren Verständnis den Betätigungskolben 10 aus Fig. 5 zusammen mit wesentlichen Teilen einer hier nicht im einzelnen erläuterten Nachstellmechanik 40, wie sie beispielsweise aus der EP 0 403 635 B1 bekannt ist. In Fig. 6 ist gut zu erkennen, wie die axialkraftübertragende Konusfläche 18 am Stahlbauteil 20 mit einer entsprechenden Konusfläche zusammenwirkt, die an einer Nachstellmutter 38 der Nachstellmechanik 40 ausgebildet ist.

## Patentansprüche

1. Betätigungskolben (10) einer hydraulisch und mechanisch betätigbaren Teilbelag-Scheibenbremse für Kraftfahrzeuge zur abdichtenden und verschiebbaren Anordnung in einer Zylinderbohrung der Scheibenbremse, der eine axialkraftübertragende Konusfläche (18) zum Zusammenwirken mit einer entsprechenden Konusfläche einer mechanischen Betätigungseinrichtung der Scheibenbremse aufweist,
**dadurch gekennzeichnet, daß**
- der die axialkraftübertragende Konusfläche (18) umfassende Teil des Betätigungskolbens (10) aus Stahl und der zum Zusammenwirken mit der Zylinderbohrung der Scheibenbremse vorgesehene Teil des Betätigungskolbens (10) aus Leichtmetall oder aus Kunststoff besteht, und daß
- die genannten Bauteile des Betätigungskolbens (10) zusammen ein einstückiges Verbundbauteil bilden.

2. Betätigungskolben nach Anspruch 1,
**dadurch gekennzeichnet, daß** der Betätigungskolben (10) hohl ist und das die axialkraftübertragende Konusfläche (18) aufweisende Stahlbauteil (20) als in dem Kunststoff- oder Leichtmetallbauteil (22) aufgenommener, hohlzylindrischer Einsatz ausgebildet ist.

3. Betätigungskolben nach Anspruch 2,
**dadurch gekennzeichnet, daß** der hohle Betätigungskolben (10) einen ersten Abschnitt (30) mit kleinerem Innendurchmesser und einen zweiten Abschnitt (32) mit größerem Innendurchmesser aufweist, und daß das die axialkraftübertragende Konusfläche (18) aufweisende Stahlbauteil (20) sich entlang zumindest annähernd der gesamten Länge des zweiten Abschnitts (32) erstreckt.

4. Betätigungskolben nach Anspruch 3,
**dadurch gekennzeichnet, daß** das die axialkraftübertragende Konusfläche (18) aufweisende Stahlbauteil (20) an seinem dem ersten Abschnitt (30) des Betätigungskolbens (10) zugewandten Ende einen radial gerichteten Ringflansch (34) aufweist.

5. Betätigungskolben nach Anspruch 4,
**dadurch gekennzeichnet, daß** der Ringflansch (34) radial nach innen ragt.

6. Betätigungskolben nach einem der Ansprüche 3 bis 5,
**dadurch gekennzeichnet, daß** das die axialkraftübertragende Konusfläche (18) aufweisende Stahlbauteil (20) sich auch in den ersten Abschnitt (30) des Betätigungskolbens (10) erstreckt.

7. Betätigungskolben nach Anspruch 1 oder 6,
**dadurch gekennzeichnet, daß** der Betätigungskolben (10) hohl ist und das die axialkraftübertragende Konusfläche (18) aufweisende Stahlbauteil (20) als in dem Kunststoff- oder Leichtmetallbauteil (22) aufgenommener, im wesentlichen topfförmiger Einsatz ausgestaltet ist, der einen Teil der Stimfläche des Betätigungskolbens (10) bildet, die einer Bremsscheibe zugewandt ist.

8. Betätigungskolben nach einem der vorhergehenden Ansprüche,
**dadurch gekennzeichnet, daß** das Stahlbauteil (20) in das Leichtmetall oder den Kunststoff eingegossen oder von dem Leichtmetall oder dem Kunststoff umspritzt ist.

9. Betätigungskolben nach einem der vorhergehenden Ansprüche,
**dadurch gekennzeichnet, daß** das Stahlbauteil (20) mit dem Kunststoff- oder Leichtmetallbauteil (22) verklebt ist oder in das Kunststoff- oder Leichtmetallbauteil (22) gepreßt ist.

10. Betätigungskolben nach einem der vorhergehenden Ansprüche,
**dadurch gekennzeichnet, daß** das Stahlbauteil (20) auf einer Außenumfangsfläche mit Vorsprüngen (28) versehen ist, die einen Formschluß mit dem Kunststoff- oder Leichtmetallbauteil (22) bewirken.

11. Betätigungskolben nach einem der vorhergehenden Ansprüche,
**dadurch gekennzeichnet, daß** das Stahlbauteil (20) auf einer der axialkraftübertragenden Konusfläche (18) axial gegenüberliegenden Seite zumindest eine zur materialschonenden Übertragung von Axialkräften geeignete, radiale Ringfläche (24) aufweist.

12. Betätigungskolben nach einem der vorhergehenden Ansprüche,
**dadurch gekennzeichnet, daß** das Bauteil (22) ein Leichtmetallbauteil ist und aus einer AlSi7-Legierung bis zu einer AlSi12-Legierung mit einem thermischen Ausdehnungskoeffizienten von 24 bzw. 21 x 10⁻⁶ m/(m x K) besteht und daß das Stahlbauteil (20) aus X12CrNiS 18.8 Stahl mit einem thermischen Ausdehnungskoeffizienten von 17 bis 18 x 10⁻⁶ m/(m x K) besteht.

13. Hydraulisch und mechanisch betätigbare Teilbelag-Scheibenbremse für Kraftfahrzeuge,
**gekennzeichnet durch** einen Betätigungskolben (10) gemäß einem der vorhergehenden Ansprüche.

## Claims

1. An actuating piston (10) of a hydraulically and mechanically actuable, spot-type disk brake for motor vehicles to be disposed in a sealing and displaceable manner in a cylinder bore of the disk brake and comprising an axial-force-transmitting conical surface (18) for cooperation with a corresponding conical surface of a mechanical actuating device of the disk brake,
**characterized in that**
- the part of the actuating piston (10) comprising the axial-force-transmitting conical surface (18) is made of steel and the part of the actuating piston (10) intended to cooperate with the cylinder bore of the disk brake is made of light metal or of plastics material, and that
- together said components of the actuating piston (10) form a one-piece composite component.

2. The actuating piston according to claim 1,
**characterized in that** the actuating piston (10) is hollow and the steel component (20) comprising the axial-force-transmitting conical surface (18) takes the form of a hollow-cylindrical insert accommodated in the plastic or light metal component (22).

3. The actuating piston according to claim 2,
**characterized in that** the hollow actuating piston (10) comprises a first portion (30) with a smaller inside diameter and a second portion (32) with a larger inside diameter, and that the steel component (20) comprising the axial-force-transmitting conical surface (18) extends along at least approximately the entire length of the second portion (32).

4. The actuating piston according to claim 3,
**characterized in that** the steel component (20) comprising the axial-force-transmitting conical surface (18) is provided with a radially oriented annular flange (34) at its end facing the first portion (30) of the actuating piston (10).

5. The actuating piston according to claim 4,
**characterized in that** the annular flange (34) projects radially inwardly.

6. The actuating piston according to one of claims 3 to 5, **characterized in that** the steel component (20) comprising the axial-force-transmitting conical surface (18) extends also into the first portion (30) of the actuating piston (10).

7. The actuating piston according to claim 1 or 6,
**characterized in that** the actuating piston (10) is hollow and the steel component (20) comprising the axial-force-transmitting conical surface (18) is designed as a substantially pot-shaped insert received in the plastic or light metal component (22), which pot-shaped insert constitutes a part of the end face of the actuating piston (10) facing a brake disk.

8. The actuating piston according to one of the preceding claims,
**characterized in that** the steel component (20) is cast en bloc into the light metal or the plastics material or is extrusion-coated with the light metal or the plastics material.

9. The actuating piston according to one of the preceding claims,
**characterized in that** the steel component (20) is glued to the plastic or light metal component (22) or is pressed into the plastic or light metal component (22).

10. The actuating piston according to one of the preceding claims,
**characterized in that** an outer circumferential surface the steel component (20) is provided with projections (28) that effect a positive lock with the plastic or light metal component (22).

11. The actuating piston according to one of the preceding claims,
**characterized in that** the steel component (20) comprises on a side lying axially opposite the axial-force-transmitting conical surface (18) at least one radial annular surface (24) suitable for the transmission of axial forces in a manner gentle on the material.

12. The actuating piston according to one of the preceding claims,
**characterized in that** the component (22) is a light-metal component and consists of an AlSi7 alloy up to an AlSi12 alloy with a coefficient of thermal expansion of 24 or 21 x 10⁻⁶ m/(m x K) and that the steel component (20) consists of X12CrNiS 18.8 steel with a coefficient of thermal expansion of 17 to 18 x 10⁻⁶ m/(m x K).

13. A hydraulically and mechanically actuable spot-type disk brake for motor vehicles,
**characterized by** an actuating piston (10) according to one of the preceding claims.

## Revendications

1. Piston d'actionnement (10) d'un frein à disque à garniture partielle, actionnable hydrauliquement et mécaniquement, pour véhicules automobiles, destiné à être agencé en assurant l'étanchéité et de manière à être translatable dans un alésage de cylindre du frein à disque, ce piston d'actionnement présentant une surface conique (18), transmettant la force axiale pour coopérer avec une surface conique correspondante d'un dispositif d'actionnement mécanique du frein à disque,
**caractérisé en ce que**
- la partie du piston d'actionnement (10), entourant la surface conique (18) transmettant la force axiale, est constituée d'acier et la partie du piston d'actionnement (10), prévue pour coopérer avec l'alésage de cylindre du frein à disque, est constituée de métal léger ou de matière plastique, et **en ce que**
- les pièces constitutives citées du piston d'actionnement (10) forment ensemble un élément structurel composite en une seule pièce.

2. Piston d'actionnement suivant la revendication 1, **caractérisé en ce que** le piston d'actionnement (10) est creux et la pièce constitutive en acier (20) présentant la surface conique (18) transmettant la force axiale est réalisée sous la forme d'un insert cylindrique creux, inséré dans la pièce constitutive (22) en métal léger ou en matière plastique.

3. Piston d'actionnement suivant la revendication 2, **caractérisé en ce que** le piston d'actionnement creux (10) présente une première partie (30), comportant un diamètre intérieur plus petit et une deuxième partie (32) comportant un diamètre intérieur plus grand, et **en ce que** la pièce constitutive en acier (20) présentant la surface conique (18) transmettant la force axiale s'étend le long d'au moins presque toute la longueur de la deuxième partie (32).

4. Piston d'actionnement suivant la revendication 3, **caractérisé en ce que** la pièce constitutive en acier (20), présentant la surface conique (18) transmettant la force axiale, présente, à son extrémité tournée vers la première partie (30) du piston d'actionnement (10), une bride annulaire (34) dirigée radialement.

5. Piston d'actionnement suivant la revendication 4, **caractérisé en ce que** la bride annulaire (34) fait saillie radialement vers l'intérieur.

6. Piston d'actionnement suivant l'une des revendications 3 à 5, **caractérisé en ce que** la pièce constitutive en acier (20) présentant la surface conique (18) transmettant la force axiale s'étend également dans la première partie (30) du piston d'actionnement (10).

7. Piston d'actionnement suivant la revendication 1 ou 6, **caractérisé en ce que** le piston d'actionnement (10) est creux et la pièce constitutive en acier (20) présentant surface conique (18) transmettant la force axiale est conçue sous la forme d'un insert essentiellement en forme de pot, inséré dans la pièce constitutive en matière plastique ou en métal léger (22), cet insert formant une partie de la surface frontale du piston d'actionnement (10), qui est tournée vers un disque de frein.

8. Piston d'actionnement suivant l'une des revendications précédentes, **caractérisé en ce que** la pièce constitutive en acier (20) est coulée dans le métal léger ou la matière plastique, ou est enrobée de métal léger ou de matière plastique.

9. Piston d'actionnement suivant l'une des revendications précédentes, **caractérisé en ce que** la pièce constitutive en acier (20) est collée avec la pièce constitutive (22) en métal léger ou en matière plastique, ou bien est moulée par pression dans la pièce constitutive (22) en matière plastique ou en métal léger.

10. Piston d'actionnement suivant l'une des revendications précédentes, **caractérisé en ce que** la pièce constitutive en acier (20) est munie, sur une surface extérieure périphérique, de saillies (28), qui procurent une liaison par conjugaison de formes avec la pièce constitutive (22) en matière plastique ou en métal léger.

11. Piston d'actionnement suivant l'une des revendications précédentes, **caractérisé en ce que** la pièce constitutive en acier (20) présente, sur un côté opposé axialement à la surface conique (18) transmettant la force axiale, au moins une surface annulaire radiale (24) propre à transmettre des forces axiales avec économie de matière.

12. Piston d'actionnement suivant l'une des revendications précédentes, **caractérisé en ce que** la pièce constitutive (22) est une pièce constitutive en métal léger (22) et est constituée d'un alliage AlSi7 à un alliage AlSi12, comportant des coefficients de dilatation thermique respectifs de 24 et 21*x*10⁻⁶ m/(m x K), et **en ce que** la pièce constitutive en acier (20) est constituée d'un acier X12CrNiS 18.8, comportant un coefficient de dilatation thermique de 17 à 18*x*10⁻⁶ m/(m x K).

13. Frein à disque à garniture partielle, actionnable hydrauliquement et mécaniquement, pour véhicule automobiles, **caractérisé par** un piston d'actionnement (10) suivant l'une des revendications précédentes.
